Europäisches Patentamt

European Patent Office

Office européen des brevets

(11) Veröffentlichungsnummer: **0 350 477**
**A2**

(12) **EUROPÄISCHE PATENTANMELDUNG**

(21) Anmeldenummer: **89890181.4**

(22) Anmeldetag: **05.07.89**

(51) Int. Cl.5: **H 02 H 9/04**

(30) Priorität: **06.07.88 AT 1751/88**

(43) Veröffentlichungstag der Anmeldung:
**10.01.90 Patentblatt 90/02**

(84) Benannte Vertragsstaaten:
**AT BE CH DE ES FR GB IT LI NL SE**

(71) Anmelder: **Felten & Guilleaume Fabrik elektrischer Apparate Aktiengesellschaft**
**3943 Schrems-Eugenia (AT)**

(72) Erfinder: **Biegelmeier, Gottfried, Prof. Ing. Dr. phil.**
**Greinergasse 30**
**A-1195 Wien (AT)**

(74) Vertreter: **Beer, Manfred, Dipl.-Ing. et al**
**Patentanwälte Dipl.-Ing. Otto Beer, Dipl.-Ing. Manfred Beer Lindengasse 8, Postfach 462**
**A-1071 Wien (AT)**

(54) **Abtrennvorrichtung für Überspannungsableiter.**

(57) Eine Abtrennvorrichtung für Überspannungsableiter (1) besteht aus einer Stromunterbrechungseinrichtung zur Unterbrechung des Netzstromes nach einer Stoßbeanspruchung des Ableiters (1), die zu seiner Beschädigung geführt hat, oder nach dem Leitendwerden des spannungsabhängigen Widerstandes (1a) im Ableiter (1) infolge von Alterungserscheinungen. Der Unterbrecherkontakt (2) der Stromunterbrechungseinrichtung wird von einem Schaltmechanismus (3), der durch ein Auslöserelais (5) betätigt wird, geöffnet. Die Auslösespule des Auslöserelais (5) ist mit der Sekundärwicklung (8) eines Durchsteck-Stromwandlers (7, 8), durch den die Erdungsleitung (6a, 6b) des Ableiters (11) geführt ist, über ein Zeitverzögerungsglied (9) verbunden. Dadurch wird der Stromwandler (7, 8) bei Fließen eines Fehlerstromes aus dem Netz über einen zugeordneten schadhaften Ableiter (1) erregt und damit das Auslöserelais zeitverzögert betätigt. Dadurch bewirken kurzzeitige Stoßströme keine Auslösung, wogegen lang fließende Netzströme zu einer Auslösung des Auslöserelais (5) führen und der Unterbrecherkontakt (2) geöffnet wird.

Figur 3

**Beschreibung**

## Abtrennvorrichtung für Überspannungsableiter

Die Erfindung betrifft eine Abtrennvorrichtung für Überspannungsableiter zur Unterbrechung der Verbindung des Überspannungsableiters mit dem Anlagenerder nach einer Stoßstrombeanspruchung, die zu seiner Beschädigung geführt hat, oder nach dem Leitendwerden des spannungsabhängigen Widerstandes im Überstromableiter infolge von Alterungserscheinungen mit einer Stromunterbrechungseinrichtung.

Derartige Abtrennvorrichtungen für Überspannungsableiter (in der Folge auch kurz Ableiter genannt) dienen dazu, nach einer Stoßbeanspruchung des Ableiters, die zu seiner Beschädigung geführt hat oder nach dem Leitendwerden des spannungsabhängigen Widerstandes im Ableiter infolge von Alterungserscheinungen den Netzfolgestrom zu unterbrechen.

Es sind Ableiter bekannt, die aus einer Abtrennvorrichtung in Serie mit einer Gasentladungstrecke und einem spannungsabhängigen Widerstand oder nur in Serie mit einem spannungsabhängigen Widerstand bestehen, wobei die Abtrennvorrichtung entweder aus Teilen aufgebaut ist, die durch einen Schmelzstreifen, Schmelzdraht oder ein Schmelzlot miteinander verbunden sind oder die als schaltbare Trennvorrichtung mit Betätigungsorgan, Schaltschloß, Kontaktapparat und einem Überstromauslöser ausgeführt ist, wobei alle Bauteile in einem gemeinsamen Gehäuse aus Isolierstoff angeordnet sind, das auch die Anschlußklemmen für den aktiven Leiter und die Erdungsleitung trägt.

Eine schaltbare Abtrennvorrichtung wird z.B. in der EP-A 46545 beschrieben. Sie ist ähnlich wie ein Leitungs schutzschalter aufgebaut und besteht aus dem Kontaktapparat mit Schaltschloß, Bimetallauslöser und elektromagnetischem Schnellauslöser.

Andere Konstruktionen bestehen aus einem Schmelzstreifen oder Schmelzdrähten aus Silber oder Kupfer, die mittels eines niedrig schmelzenden Lotes mit der Funkenstrecke oder dem spannungsabhängigen Widerstand verbunden sind. Sie können auch in Löschsand eingebettet sein.

Bei den meisten Konstruktionen ist die Abtrennvorrichtung so ausgebildet, daß der Ableiter zusammen mit der Abtrennvorrichtung nach dem Ansprechen der Abtrennvorrichtung nicht mehr verwendet werden kann und ausgewechselt werden muß. Es können auch auswechselbare Schmelzeinsätze oder leitungsschutzschalterähnliche Konstruktionen verwendet werden (GB-A-2,010,613 sowie DE-C-97 52 52 und FR-A-812 674).

Alle Konstruktionen haben eine Strom-Zeitkennlinie, die infolge der verwendeten Bimetallauslöser und Magnetauslöser und des geforderten niedrigen Widerstandes (Stoßströme im Kiloamperebereich dürfen keinen hohen Spannungsabfall verursachen) erst im Amperebereich mit der Abschaltung einsetzen.

Auch Lotverbindungen mit den spannungsabhängigen Widerständen, die beim Leitendwerden der Widerstände aufgeheizt werden, sind kaum besser zu dimensionieren.

Diese Unempfindlichkeit der Abtrennvorrichtungen der auf dem Markt befindlichen Ableiter spielt bei der Nullung keine Rolle, weil bei der Nullung die Ableiter für die Außenleiter mit dem Nulleiter (PEN-Leiter) verbunden sind und Fehlerströme in den Ableitern durch den Nulleiter zum Transformator zurückfließen, ohne daß dadurch gefährliche Berührungsspannungen entstehen.

Anders ist es aber bei der Fehlerstromschutzschaltung. Hier verursachen die relativ hohen Werte der Ansprechströme der Abtrennvorrichtung Schwierigkeiten bei der Dimensionierung der Anlagenerder.

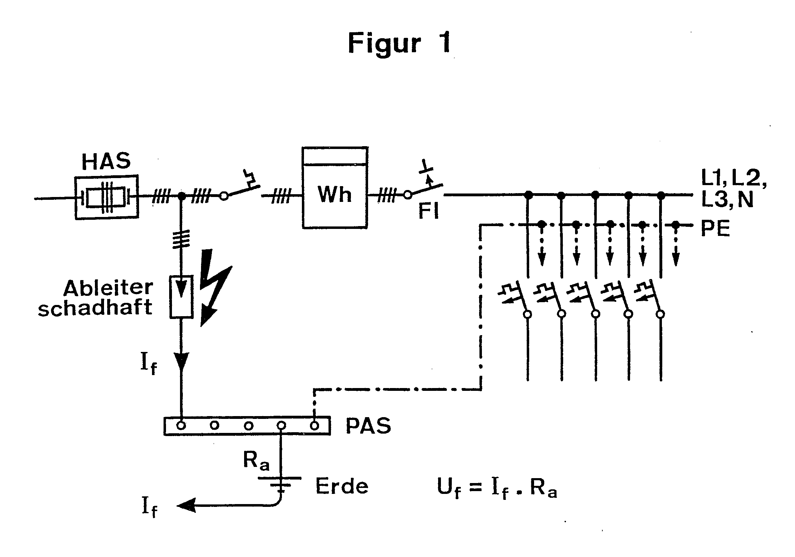

Technisch wird der beste Überspannungsschutz einer Anlage dann verwirklicht, wenn die Ableiter in der Nähe der Hausanschlußsicherung (HAS, siehe Figur 1) installiert werden und die Verbindungsleitung zur Potentialausgleichsschiene (PAS) so kurz als möglich ist. Wird aber bei einer derartigen Installation ein Ableiter schadhaft, dann fließt der Strom vor dem Fehlerstromschutzschalter über die potentialausgleichsschiene zum Anlagenerder, dessen Widerstand entsprechend den Errichtungsvorschriften mit dem Auslösenennstrom des Fehlerstromschutzschalters berechnet wird, also einige hundert Ohm betragen kann (z.B. bei $I_{\Delta\,n} = 100$ mA und 50 V Fehlerspannung ergibt sich ein zulässiger Wert von 500 Ohm). Hat die Abtrennvorrichtung des Ableiters einen Grenzwert des Ansprechstromes von z.B. 5A, dann wird sie überhaupt nicht ansprechen, weil bei 220 V und 500 Ohm nur rund ein halbes Ampere zum Fließen kommt. Dadurch wird die Potentialausgleichsschiene praktisch an die Netzspannung gelegt und diese hohe Fehlerspannung wird über die Schutzleitung (PE, siehe Fig. 1) in die Anlage verschleppt. Es wird deshalb verlangt, daß bei einer derartigen Installation der Anlagenerder nicht nur nach der Ansprechempfindlichkeit des FI-Schutzschalters, sondern auch nach dem Ansprechstrom der Abtrennvorrichtung des Ableiters entsprechend der Formel

$$R_a \leqq \frac{U_L}{I_{\ddot{u}a}}$$

berechnet wird, wobei $U_1$ die zulässige Fehlerspannungsgrenze und $I_{\ddot{u}a}$ den Ansprechstrom der Abtrennvorrichtung bedeutet, bei dem innerhalb einer vorgeschriebenen Zeit die Abtrennung erfolgt.

Zum Beispiel ergeben sich bei 5 A Ansprechstrom und 50 V Fehlerspannungsgrenze maximal 10 Ohm Erdungswiderstand. Dies ist ein Wert, der in vielen Anlagen nicht erreicht werden kann. Dazu kommt noch, daß man wegen der unempfindlichen Abtrennvorrichtung für das Ansprechen beim Ansprechstrom eine Ansprechzeit von 30 s zuläßt. Bedenkt man, daß während dieser Zeit über die Potentialausgleichsschiene alle geschützten Betriebsmittel der Anlage praktisch eine Fehlerspannung von 220 V annehmen, so ist dies nicht vertretbar. Man müßte die Abtrennung des schadhaften Ableiters, wie bei den FI-Schutzschaltern, bei 50 V in 0,5 s verlangen. Steigt die Fehlerspannung auf 220 V, dann muß die Abschaltung innerhalb von 0,15 s erfolgen.

Es ist deshalb vorgeschlagen worden, die Ableiter nach dem Fehlerstromschutzschalter anzuordnen (DE-A-30 29 453). Führt man die Schaltung nach Figur 2 aus, so muß zunächst ein Fehlerstromschutzschalter verwendet werden, dessen Auslösezeit einen Mindestwert von 10 ms nicht unterschreitet (Bauformen S oder G), um Fehlauslösungen durch Stoßströme und Netzfolgeströme zu vermeiden. Der Fehlerstromschutzschalter löst dann aber auch aus, wenn ein Ableiter schadhaft wird, so daß er gewissermaßen als Abtrennvorrichtung wirkt. Dies ist ein Nachteil, weil dadurch auch die Anlage abgeschaltet wird und damit die Stromzufuhr solange unterbrochen wird, bis der fehlerhafte Ableiter ausgewechselt ist. Ein weiterer Nachteil dieser Schaltung besteht darin, daß bei direkten Blitzeinwirkungen Ableiter explodieren und bei Montage nach dem Fehlerstromschutzschalter, etwa in Form eines aufsteckbaren Bauteils, nicht nur die Verteilung, sondern auch den Fehlerstromschutzschalter schwer beschädigen können.

Diese Nachteile sprechen also für die Montage der Ableiter vor der Zählerverteilung im Hausanschlußkasten oder in einem eigenen, unbrennbaren Gehäuse zwischen dem Hausanschlußkasten und dem Zählerverteiler. Um besondere For derungen in bezug auf den Erdungswiderstand des Anlagenerders zu vermeiden, muß die Abtrennvorrichtung dann aber etwa mit der gleichen Empfindlichkeit ansprechen, wie der Fehlerstromschutzschalter, der die Anlage schützt, das heißt, die untere Grenze des Ansprechstromes muß bei einigen zehntel Ampere liegen. Des weiteren ist zu fordern, daß sie so verzögert anspricht, daß die Ableitung von Stromstößen im Kiloamperebereich und etwaiger Netzfolgeströme mit Stromdurchflußdauern bis zu 10 ms ohne Auslösung möglich ist. Weiters soll sie so niederohmig als möglich sein und in der Hauptstrombahn möglichst den gleichen Querschnitt haben wie die Erdungsleitung, die für die Ableiter verwendet wird. Die Unterbrecherkontakte der Abtrennvorrichtung müssen im eingeschalteten Zustand Stoßströmen von einigen zehn Kiloampere ohne Verschweissung standhalten und dürfen nicht korrodieren, auch wenn sie jahrelang ohne Stromfluß im Einsatz stehen.

Der Erfindung liegt die Aufgabe zugrunde, eine Abtrennvorrichtung der eingangs genannten Gattung zu schaffen, welche die genannten Nachteile nicht besitzt und den geschilderten Anforderungen möglichst weitgehend gerecht wird.

Die erfindungsgemäße Abtrennvorrichtung löst diese Aufgabe dadurch, daß ein Unterbrecherkontakt und ein Schaltmechanismus für den Unterbrecherkontakt, vorzugsweise mit Freiauslösung und vorzugsweise mit einem Betätigungsorgan für die Rückstellung des Schaltmechanismus vorgesehen sind und daß der Schaltmechanismus durch ein Auslöserelais betätig wird, dessen Auslösespule wenigstens über ein mechanisches oder elektrisches Zeitverzögerungsglied mit der Sekundärwicklung eines Stromwandlers verbunden ist, durch den die Leitungen des Überspannungsableiters geführt sind, so daß dieses Auslöserelais den Unterbrecherkontakt netzspannungsunabhängig und zeitverzögert betätigt und durch dessen Öffnung den im Überspannungsableiter fließenden Netzstrom unterbricht.

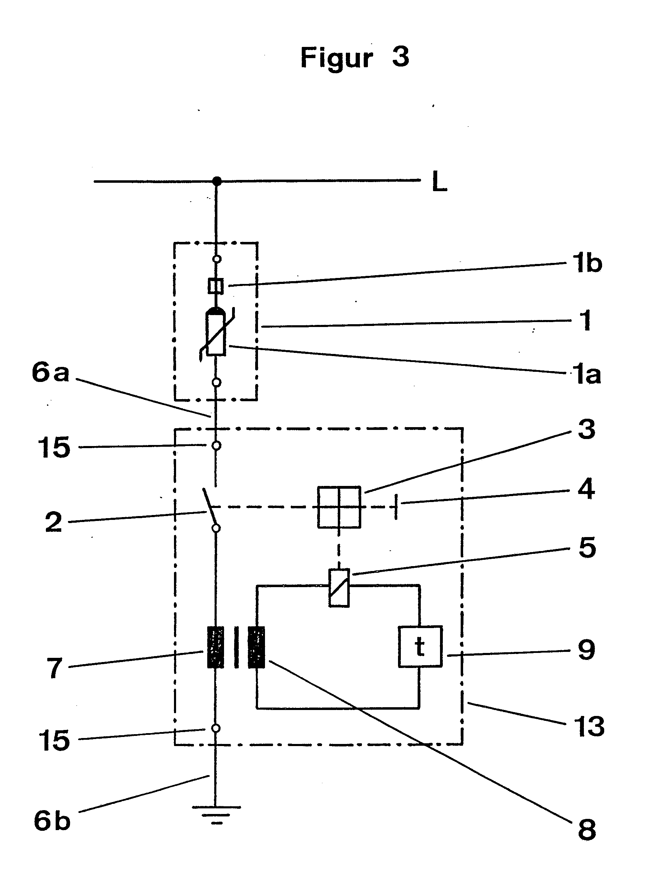

Bei der erfindungsgemäßen Abtrennvorrichtung wird der Schaltmechanismus durch ein Auslöserelais betätigt, dessen Auslösespule mit der Sekundärwicklung eines Durchsteck-Stromwandlers über ein mechanisches oder elektrisches Zeitglied netzspannungsunabhängig und zeitverzögert verbunden ist. Durch den Stromwandler wird die Erdungsleitung der zugeordneten Ableiter geführt. Dadurch wird beim Fließen eines Fehlerstromes in einem zugeordneten, schadhaft gewordenen Ableiter der Stromwandler erregt. Das Auslöserelais betätigt seinerseits den Unterbrecherkontakt durch dessen Öffnung der Netzstrom ausgeschaltet wird (Fig. 3). Vorteilhafterweise wird die Auslösung auf einen Ansprechstrom von einigen hundert Milliampere eingestellt und beim etwa fünffachen Ansprechstrom eine minimale Auslösezeit von 40 ms und eine maximale Auslösezeit von 150 ms vorgeschrieben, die auch bei höheren Fehlerströmen nicht mehr unterschritten wird. Dies entspricht etwa den Werten, die für selektivstoßstromfeste Fehlerstromschutzschalter angewendet werden.

Um zu verhindern, daß der Überspannungsschutz durch Unterbrechen der Ableitererdung unbeabsichtigt unwirksam wird, kann das manuelle Betätigungsorgan erfindungsgemäß so ausgebildet werden, daß mit ihm die Stromunterbrechungseinrichtung nur eingeschaltet, nicht aber ausgeschaltet werden kann.

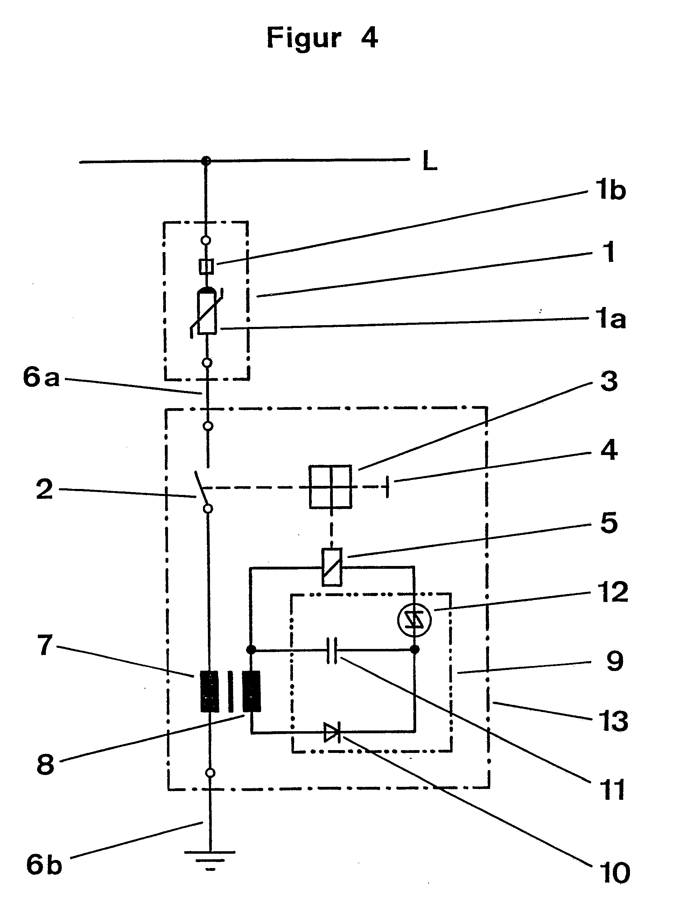

Das elektrische Zeitverzögerungsglied kann erfindungsgemäß aus einer netzspannungsunabhängigen, elektronischen Speicherschaltung bestehen, die aus einem Gleichrichter, einem Speicherkondensator und aus einem ladespannungsabhängigen, elektronischen Schaltelement aufgebaut ist, wobei das Auslöserelais nach Überschreiten einer vorgegebene Grenze durch die Kondensatorrentladung impulsförmig betätigt wird (Fig. 4).

Wird nach einem anderen Vorschlag der Erfindung ein mechanisch-hydraulisches oder ein mechanisch-pneumatisches Zeitverzögerungsglied eingesetzt, dann kann diese zum Beispiel aus einem Auslöserelais bestehen, das allseitig gekapselt und mit einer viskosen Flüssigkeit gefüllt ist, wodurch die Abhebebewegung des Relaisankers verzögert wird (mechanisch-hydraulische Lösung) oder die Verzögerung erfolgt mechanisch-pneumatisch mit einer Kolben-Luftdämpfung. In diesen Fällen kann das Zeitverzögerungsglied mit dem Auslöserelais eine bauliche Einheit bilden.

Erfindungsgemäß wird bei der Energiespeicherschaltung und bei den mechanischen zeitverzögerungsgliedern als Auslöserelais vorzugsweise ein Permanentmagnetauslöser nach dem Haltemagnet-Prinzip verwendet.

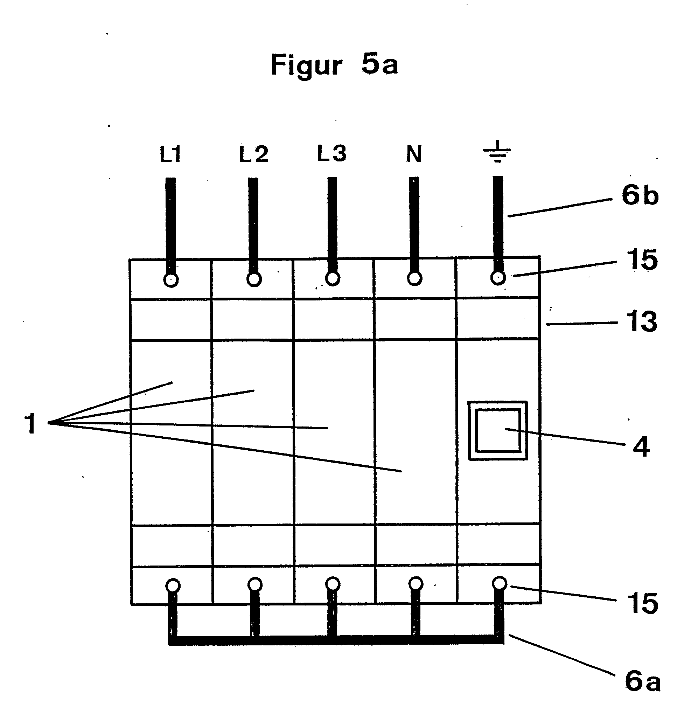

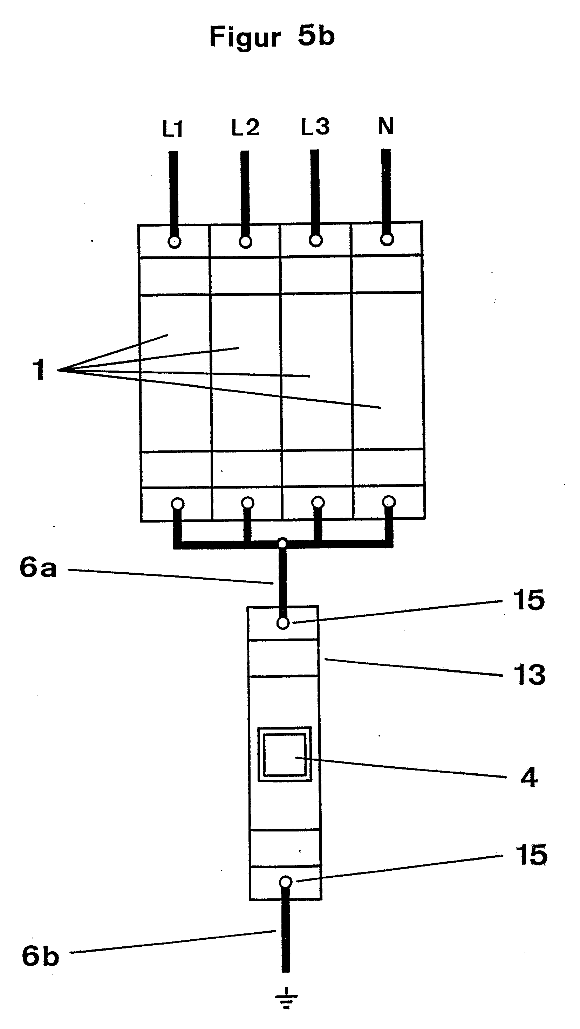

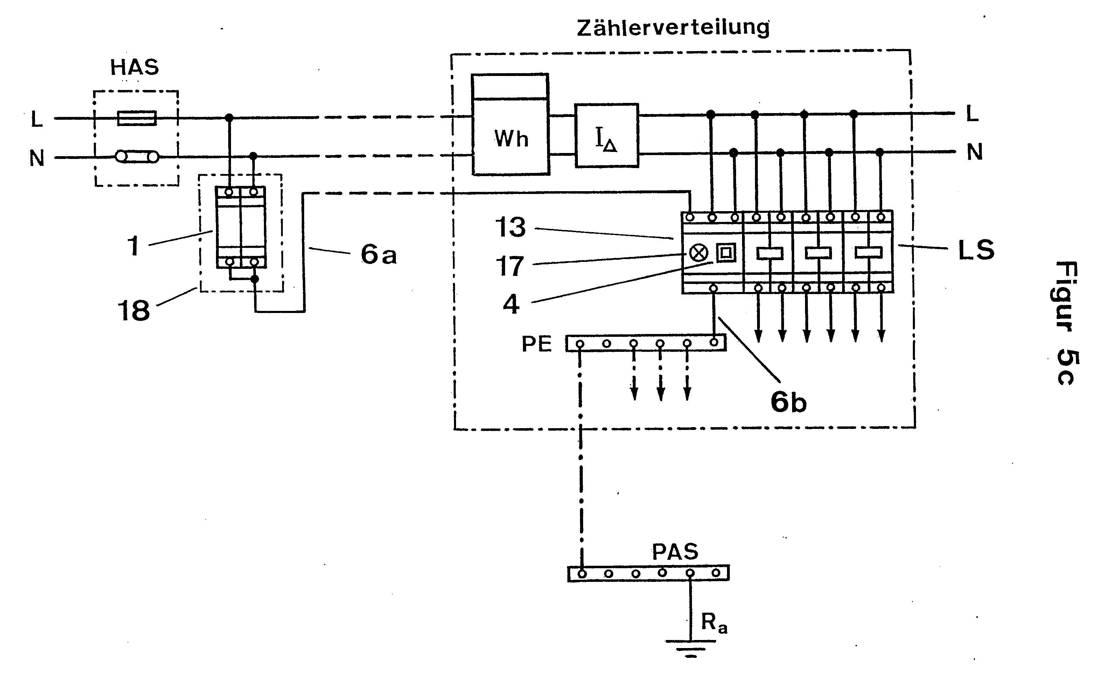

Gemäß einem Vorschlag der Erfindung können die Bauteile der Abtrennvorrichtung in ein eigenes Gehäuse mit zwei Anschlußklemmen, von denen eine mit dem zugeordneten Ableiter und die andere mit dem Anlagenerder (Potentialausgleichsschiene) verbunden ist, eingebaut werden. Die Baueinheit wird dann in der üblichen Weise mittels Montageschrauben auf einer Montagefläche und/oder mittels einer Schnellbefestigungseinrichtung auf einer geeigneten Montageschiene befestigt (Fig. 5a, b und c). Als Ableiter können die üblichen, auf dem Markt befindlichen Geräte mit unempfindlicher Abtrennvorrichtung verwendet werden.

Bei dieser Lösung besitzt jeder zugeordnete Ableiter zusätzlich eine, wenn auch einfache und unempfindliche, eingebaute Abtrennvorrichtung. Hat nämlich die erfindungsgemäße Abtrennvorrichtung geschaltet und sind damit die Gefahren von Berührungsspannungen beseitigt worden, dann können sonst über die beschädigten Ableiter Ströme von Außenleiter zu Außenleiter oder zum Neutralleiter fließen, die unter Umständen eine Brandgefahr verursachen können, wenn sie nicht im Ableiter unterbrochen werden.

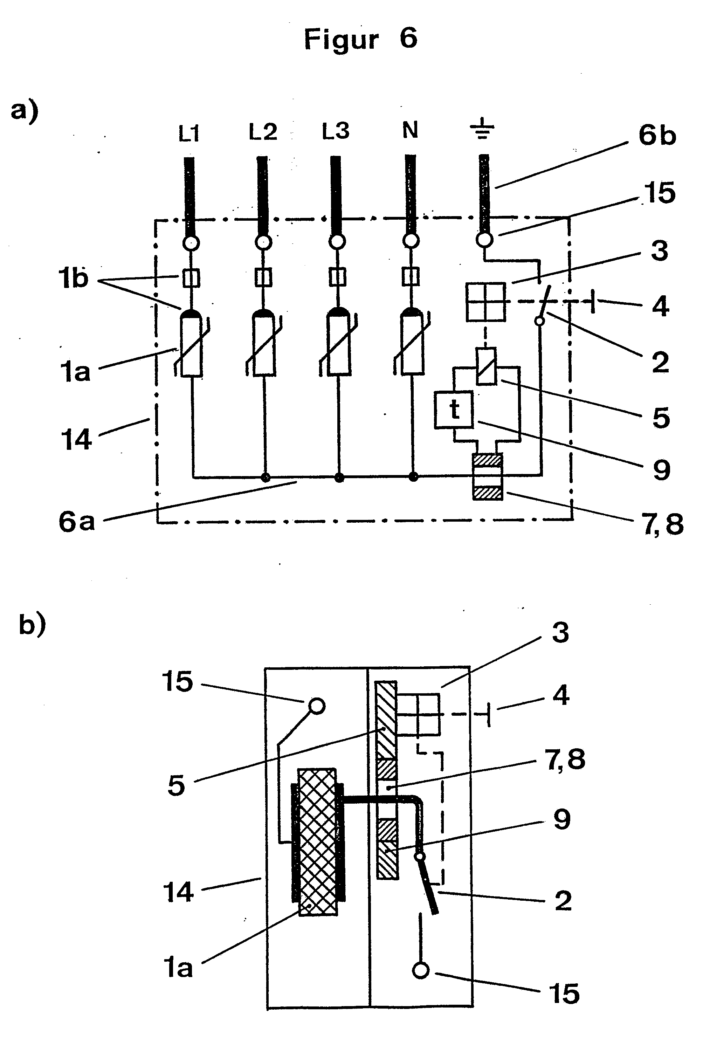

Besser ist es, wenn die erfindungsgemäße Abtrennvorrichtung zusammen mit den Bauelementen für den Überspannungs schutz (Varistoren, Funkenstrecken etc.) in einem Gehäuse angeordnet ist, das die Anschlußklemmen für den Netzanschluß und die Erdungsleitung trägt und in der üblichen Weise mittels Montageschrauben auf einer Montagefläche und/oder mittels einer Schnellbefestigungseinrichtung auf einer geeigneten Montageschiene befestigt werden kann (Fig. 6).

Bei einer mehrpoligen Ausführung muß trotzdem jede spannungsabhängige Widerstandsscheibe eine zusätzliche einfache Trennstelle (z.B. Lötstelle) besitzen (Fig. 6a). Bei einpoligen Ableitern kann man sich auf die erfindungsgemäße Abtrennvorrichtung beschränken, die mit der spannungsabhängigen Widerstandsscheibe in einem gemeinsamen Gehäuse zusammengefaßt ist (Fig. 6b).

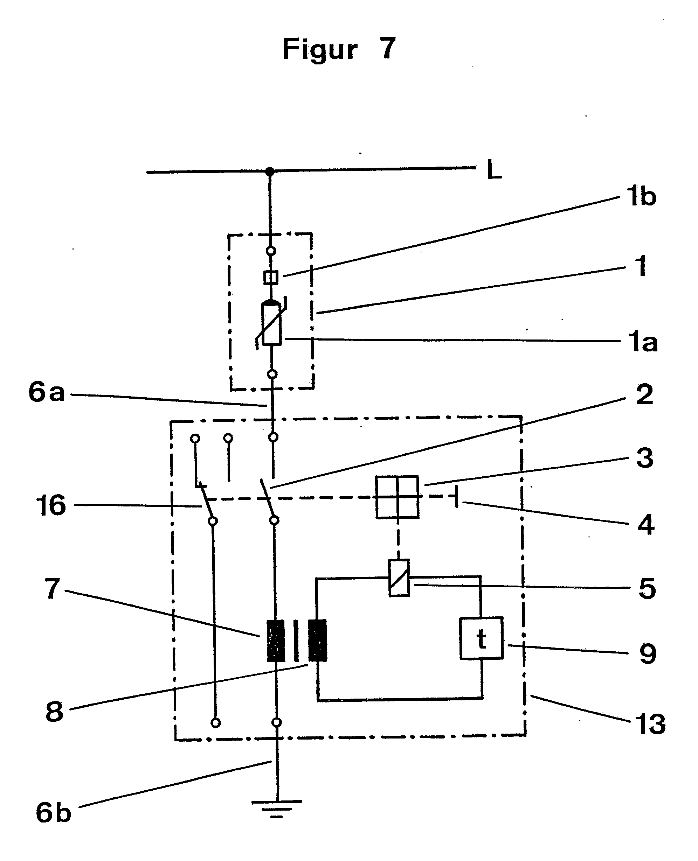

Wie bereits erwähnt, soll die Verbindung zwischen der Erdungsklemme der Ableiter und dem Anlagenerder so kurz als möglich sein. Montiert man die Ableiter im Hausanschlußkasten oder wegen der Gefahr von Lichtbogenschäden in einem eigenen Gehäuse nahe dem Hausanschluß, so besteht bei der Fehlerstromschutzschaltung praktisch immer die Notwendigkeit, die Erdungsleitung zur Schutzleiterschiene in der Verteilung zu führen, von wo aus die Verbindungsleitung zur Potentialausgleichsschiene abgezweigt wird. Dabei ist es unangenehm, daß das Ansprechen der Ableiter, die ja nicht in der Zählerverteilung montiert sind, kaum bemerkt wird. Mit der oben beschriebenen erfindungsgemäßen Abtrennvorrichtung als eigene Baueinheit (Fig. 5) ist es möglich, diesen Mangel zu beseitigen, wenn die erfindungsgemäße Abtrennvorrichtung getrennt von den Ableitern in der Verteilung montiert wird, etwa zwischen der ankommenden Erdungsleitung der Ableiter und der Schutzleiterschiene. Man kommt so zu einer Montageart, wie sie in Fig. 5c gezeigt ist. Um das Ansprechen der Abtrennvorrichtung auffällig zu machen, kann erfindungsgemäß ein Signalkontakt vorgesehen sein, der durch den Schaltmechanismus des Unterbrecherkontaktes betätigt wird (Fig. 7).

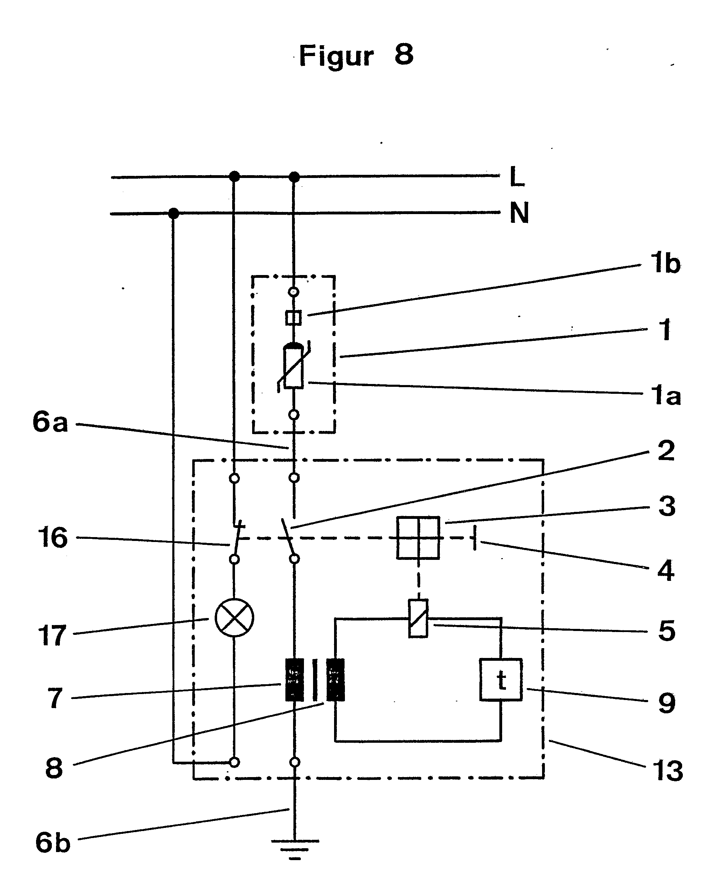

Man kann auch erfindungsgemäß im Gehäuse der Abtrennvorrichtung den Ausschaltzustand des Unterbrecherkontaktes optisch (z.B. in Form einer Blinkschaltung), oder akustisch (z.B. durch einen Summer) durch eigene Bauelemente anzeigen (Fig. 8).

Bei der Fehlerstromschutzschaltung macht also die Installationsart, bei der die Ableiter in einem eigenen Gehäuse nahe dem Hausanschluß feuersicher montiert sind und die erfindungsgemäße Abtrennvorrichtung im Zählerverteiler die Funktionsbereitschaft signalisiert, ein Optimum an Sicherheit gegen Sachschäden durch Überspannungen und durch etwa von den Ableitern verursachte Lichtbogenwirkungen möglich.

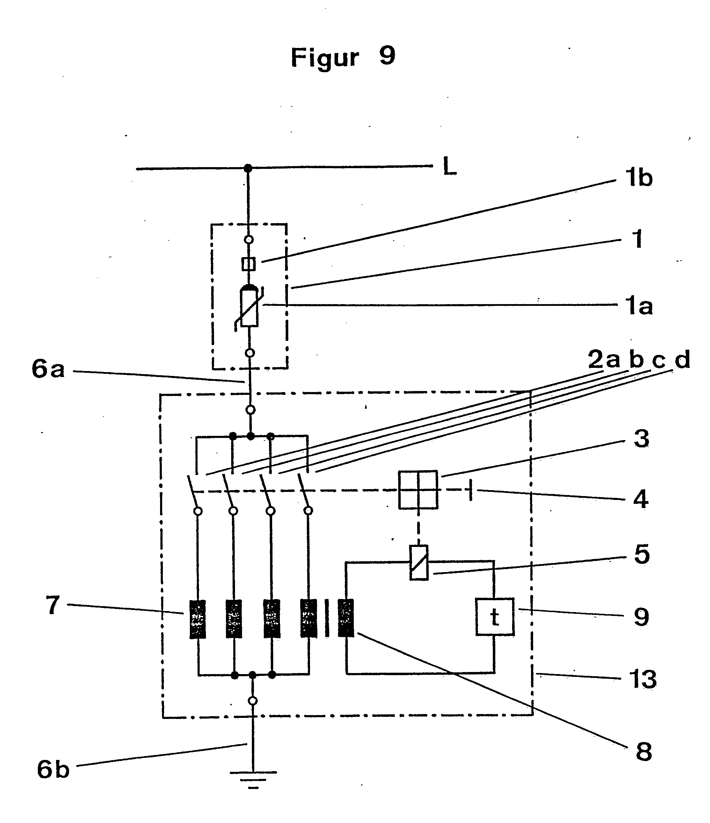

Am einfachsten läßt sich die erfindungsgemäße Abtrennvorrichtung durch Änderungen handelsüblicher Fehlerstromschutzschalter verwirklichen. Zu diesem Zweck werden bei einem Fehlerstromschutzschalter, der zur Vermeidung von Fehlauslösungen eine Mindestauslösezeit von 10 ms (Kennlinie G oder S) besitzen muß, die Unterbrecherkontakte erfindungsgemäß für die Unterbrechung der Erdungsleitung des zugeordneten Ableiters benutzt und bei mehrpoligen Schaltern parallel geschaltet (Fig. 9). Das Betätigungsorgan für die Rückstellung des Schaltmechanismus kann erfindungsgemäß so abgeändert werden, daß es nur für das Einschalten, aber nicht für das Ausschalten geeignet ist.

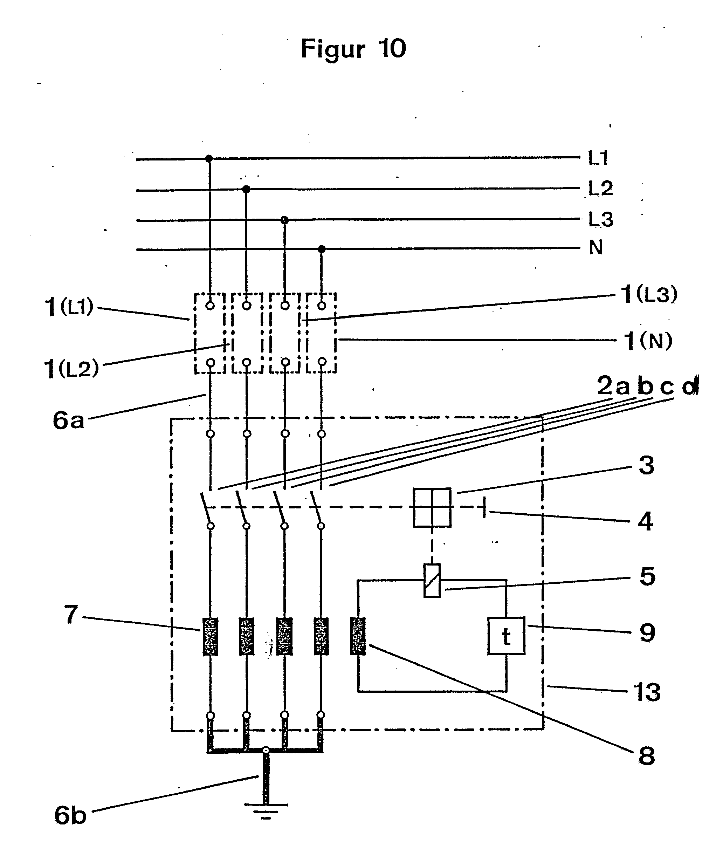

Sind mehrere Ableiter vorhanden, z.B. für die Außenleiter und den Neutralleiter (L1, L2, L3 und N), dann kann erfindungsgemäß die Abtrennvorrichtung ebenfalls durch Änderungen handelsüblicher Fehlerstromschutzschalter realisiert werden. Zu diesem Zweck werden bei einem Fehlerstromschutzschalter mit der Auslösekennlinie G oder S die netzseitigen Anschlußklemmen erfindungsgemäß mit den Erdungsklemmen der Ableiter verbunden. Die verbraucherseitigen Anschlußklemmen werden parallelgeschaltet und mit der Ableitererdung verbunden (Fig. 10).

Die Abänderungen der handelsüblichen Fehlerstromschutzschalter bestehen darin, daß der Auslösekreis so abgeschirmt werden muß, daß beim Ableitvorgang von Stoßströmen die FI-Schutzschalter nicht fehlauslösen.

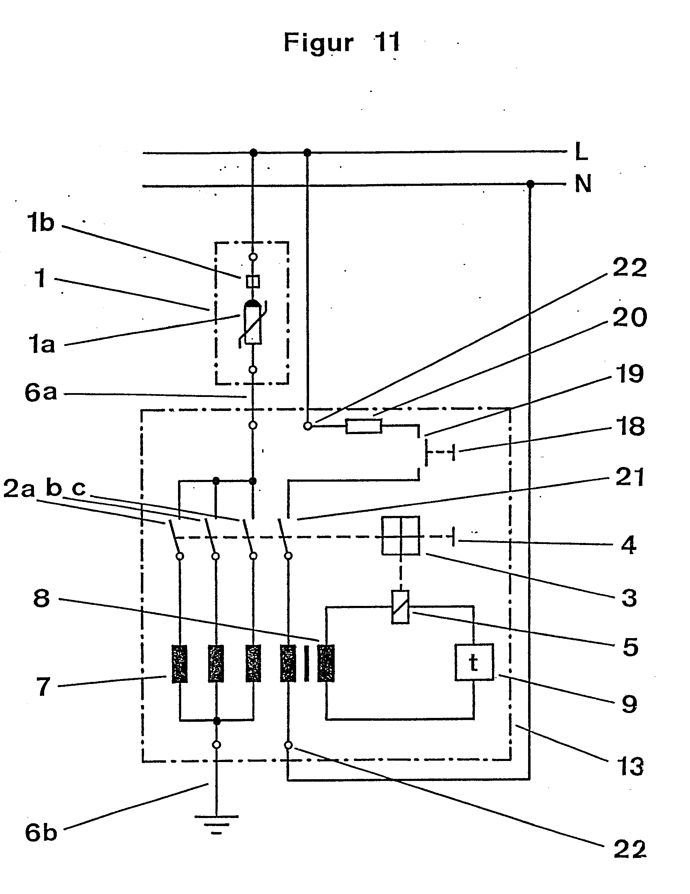

Es ist weiter vorteilhaft, bei allen Ausführungsformen erfindungsgemäßer Abtrennvorrichtungen eine prüfeinrichtung vorzusehen, bei deren Betätigung über einen Schließkontakt und einen Strombegrenzungswiderstand ein Fehlerstrom (Prüfstrom) entsprechender Stärke erzeugt wird, wodurch die Abtrennvorrichtung anspricht und damit über einen Hilfskontakt der Prüfstrom wieder unterbrochen wird (Fig. 11).

Weitere Einzelheiten, Vorteile und Merkmale der Erfindung ergeben sich aus der nachfolgenden Beschreibung bevorzugter, in der Zeichnung dargestellten Ausführungsbeispiele.

Es zeigt

Fig. 1 einen Überspannungsschutz, in dem der Ableiter in der Nähe der Hausanschlußsicherung angeordnet ist,

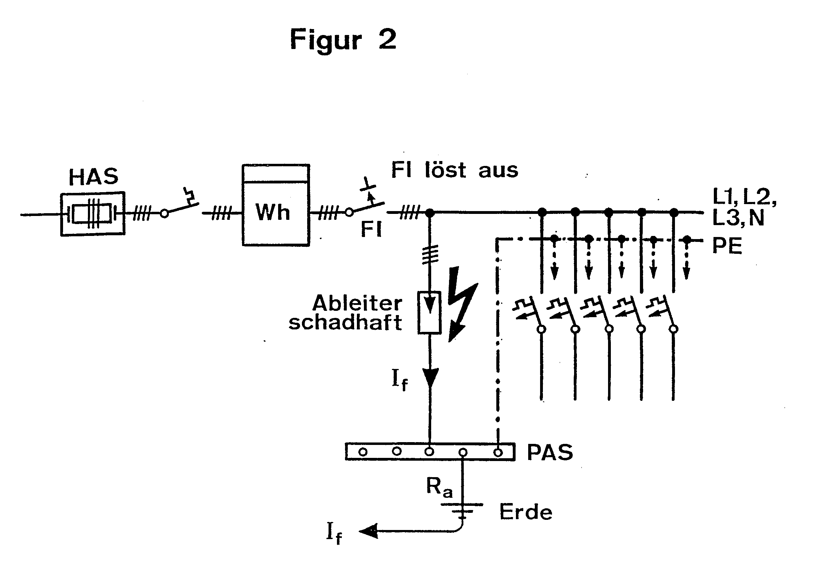

Fig. 2 eine Abtrennvorrichtung mit nach einem Fehlerstromschutzschalter angeordneten Ableitern,

Fig. 3 die grundsätzliche Schaltung einer erfindungsgemäßen Abtrennvorrichtung,

Fig. 4 eine Abtrennvorrichtung mit einer elektrischen Energiespeicherschaltung als Zeitverzögerungsglied,

Fig. 5a, 5b und 5c Ausführungsvarianten der Abtrennvorrichtung,

Fig. 6 eine weitere Ausführungsform, bei der der Ableiter in einem gemeinsamen Gehäuse angeordnet ist, und zwar

Fig. 6a für einen mehrpoligen Ableiter und

Fig. 6b für einen einpoligen Ableiter,

Fig. 7 eine Ausführungsform mit Signalkontakt,

Fig. 8 eine Ausführungsform mit Anzeigelampe,

Fig. 9 eine Ausführungsform einer Abtrennvorrichtung, mit parallelgeschalteten Unterbrecherkontakten eines mehrpoligen Schaltgerätes für einen Ableiter,

Fig. 10 eine weitere Ausführungsform, bei der jedem Unterbrecherkontakt ein Ableiter zugeordnet ist, und

Fig. 11 eine Ausführungsform mit Prüfkontakt.

In Fig. 3 ist das Grundprinzip der Erfindung dargestellt. Ein Ableiter 1 besteht aus einem spannungsabhängigen Widerstand 1a und einer relativ unempfindlichen Trennvorrichtung (Sicherungsstreifen, Schmelzlot) 1b. Der Ableiter 1 ist über die Leitungen 6a und 6b und eine Abtrennvorrichtung 13 mit Anschlußklemmen 15 mit einem Anlagenerder verbunden. Die Abtrennvorrichtung 13 besteht aus einem Unterbrecherkontakt 2, der durch einen Schaltmechanismus 3 mit Freiauslösung betätigt wird. Der Schaltmechanismus 3 wird bei Fließen eines Fehlerstromes durch das Auslöserelais 5 ausgelöst und kann von Hand aus durch ein Betätigungsorgan 4 wieder rückgestellt werden. Die Auslösespule des Auslöserelais 5 ist mit der Sekundärwicklung 8 eines Durchsteck-Stromwandlers 7, 8, durch den die Erdungsleitung 6 der zugeordneten Ableiter 1 geführt wird, verbunden. In diesen Auslösekreis ist ein mechanisches oder elektrisches Zeitverzögerungsglied 9 geschaltet, durch das der Unterbrecherkontakt 2 bei Fließen eines Fehlerstromes netzspannungsunabhängig und zeitverzögert betätigt wird. Daher löst die Abtrennvorrichtung 13 bei kurzzeitigen Ableitstoßströmen nicht aus. Dagegen erfolgt bei Netzfolgeströmen, die infolge beschädigter Ableiter auftreten, eine Auslösung.

Fig. 4 zeigt eine erfindungsgemäße Abtrennvorrichtung 13, bei der das Zeitverzögerungsglied 9 als elektrische Energiespeicherschaltung ausgebildet ist. Bei Fließen eines Fehlerstromes wird über den Durchsteck-Stromwandler 7, 8 und den Gleichrichter 10 ein Kondensator 11 aufgeladen. Nach Erreichen einer bestimmten Ladespannung und damit Ladeenergie, die wegen des Kondensators 11 langsam und nicht spontan erreicht wird, wird ein ladespannungsabhängiger elektronischer Schaltteil 12 leitend. Durch den Entladestromstoß des Kondensators 11 wird das Auslöserelais 5 ausgelöst und von diesem der Schaltmechanismus 3 betätigt.

Figur 5 zeigt eine Ausführungsform der Abtrennvorrichtung 13, die in einem eigenen Gehäuse mit Anschlußklemmen 15 untergebracht ist, und deren Betätigungsorgan 4. Das Betätigungsorgan 4 kann neben den zugeordneten Ableitern 1 (Fig. 5a), getrennt, in einer Zählerverteilung montiert werden, wogegen die zugeordneten Ableiter 1 im oder in der Nähe des Hausanschlußkasten HAS in einem schwer entflammbaren Gehäuse 18 angeordnet sind (Fig. 5c).

Figur 6a zeigt die Anordnung der Bauteile 2,3,4,5,7,8,9 der Abtrennvorrichtung und der zugeordneten Ableiter 1a, 1b in einem gemeinsamen Gehäuse 14. Bei der in Fig. 6a gezeigten mehrpoligen Ausführung, besitzen die zugeordneten Ableiter 1a zusätzlich relativ unempfindliche Trennvorrichtungen 1b. In Fig. 6b ist eine einpolige Ausführung dargestellt, bei der nur ein spannungsabhängiger Widerstand 1a zusammen mit den Bauelementen 2,3,4,5,7,8,9 der Abtrennvorrichtung und zwei Anschlußklemmen 15 für die Leitungen 6a, 6b in einem gemeinsamen Gehäuse 14 angeordnet ist.

Figur 7 zeigt eine Abtrennvorrichtung 13, bei welcher der Schaltmechanismus 3 nicht nur den Unterbrecherkontakt 2, sondern auch einen Signalkontakt 16 betätigt.

Figur 8 zeigt eine Ausführungsform der Abtrennvorrichtung 13, bei der nach dem Öffnen des Unterbrecherkontaktes 2 durch den Schaltmechanismus 3 ein Hilfskontakt 16 geschlossen wird. Dadurch leuchtet eine Lampe 17 auf und zeigt optisch an, daß die Abtrennvorrichtung angesprochen hat.

Figur 9 zeigt eine Abtrennvorrichtung 13 in Form eines umgebauten, vierpoligen Fehlerstromschutzschalters, bei dem die Unterbrecherkontakte 2a, b, c, d und die Primärwicklungen 7 des Durchsteck-Stromwandlers parallel geschaltet sind. Netzseitig werden die parallelgeschalteten Hauptstrombahnen über die Erdungsleitung 6a mit der Erdungsklemme des Ableiters 1 verbunden. Verbraucherseitig werden die Hauptstrombahnen über die Erdungsleitung 6b mit der Ableitererdung verbunden.

Fig. 10 zeigt eine Abtrennvorrichtung 13 in Form eines umgebauten, vierpoligen Fehlerstromschutzschalters, bei dem jeweils eine der Hauptstrombahnen 2a, b, c, d mit den zugeordneten Unterbrecherkontakten für die Unterbrechung der Erdungsleitung 6a, 6b der Ableiter 1(L1), 1(L2), 1(L3), 1(L4) benützt wird und daher netzseitig an die Erdungsklemmen der zugeordneten Ableiter und verbraucherseitig mit den anderen parallelgeschalteten Hauptstrombahnen an die gemeinsame Ableitererdung angeschlossen wird.

Fig. 11 zeigt eine Abtrennvorrichtung 13 in Form eines umgebauten, vierpoligen Fehlerstromschutzschalters, bei dem drei Hauptstrombahnen 2a, b, c, wie in Figur 9 beschrieben, mit einer Prüfeinrichtung mit einem Betätigungsorgan 18, einem Schließkontakt 19 und einem Strombegrenzungswiderstand 20 parallel geschaltet sind. Der Prüfstromkreis wird über den Hilfskontakt 21 und die vorhandenen Anschlußklemmen 22 der vierten Hauptstrombahn mit dem Außenleiter und dem Neutralleiter verbunden. Bei Betätigen der Prüfeinrichtung 18 werden die Unterbrecherkontakte 2a,b,c und der Hilfskontakt 21 für den Prüfstrom über den Durchsteck-Stromwandler 7, 8 und den Schaltmechanismus 3 geöffnet und damit der Prüfstrom unterbrochen und die Überlastung des Prüfwiderstandes 20 vermieden.

**Patentansprüche**

1. Abtrennvorrichtung für Überspannungsableiter (1) zur Unterbrechung der Verbindung des Überspannungsableiters mit dem Anlagenerder nach einer Stoßstrombeanspruchung, die zu seiner Beschädigung geführt hat, oder nach dem Leitendwerden des spannungsabhängigen Widerstandes im Überstromableiter infolge von Alterungserscheinungen, mit einer Stromunterbrechungseinrichtung, dadurch gekennzeichnet, daß ein Unterbrecherkontakt (2) und ein Schaltmechanismus (3) für den Unterbrecherkontakt (2), vorzugsweise mit Freiauslösung und vorzugweise mit einem Betätigungsorgan (4) für die Rückstellung des Schaltmechanismus (3) vorgesehen sind und daß der Schaltmechanismus (3) durch ein Auslöserelais (5) betätigt wird, dessen Auslösespule wenigstens über ein mechanisches oder elektrisches Zeitverzögerungsglied mit der Sekundärwicklung eines Stromwandlers (7, 8) verbunden ist, durch den die Leitungen (6a, 6b) des Überspannungsableiters (1) geführt sind, so daß dieses Auslöserelais den Unterbrecherkontakt (2) netzspannungsunabhängig und zeitverzögert betätigt und durch dessen Öffnung den im Überspannungsableiter (1) fließenden Netzstrom unterbricht.

2. Abtrennvorrichtung nach Anspruch 1, dadurch gekennzeichnet, daß das Betätigungsorgan (4) für die Rückstellung des Schaltmechanismus (3) so ausgebildet ist, daß es nur für das Einschalten, nicht aber für das Ausschalten der Stromunterbrechungseinrichtung (2) geeignet ist.

3. Abtrennvorrichtung nach Anspruch 1 und 2, dadurch gekennzeichnet, daß das Zeitverzögerungsglied (9) eine mechanisch-hydraulische oder mechanisch-pneumatische Einrichtung ist und mit dem Auslöserelais (5) eine bauliche Einheit bildet.

4. Abtrennvorrichtung nach Anspruch 1 und 2, dadurch gekennzeichnet, daß das Zeitverzögerungsglied (9) aus einer netzspannungsunabhängigen, elektronischen Speicherschaltung, bestehend aus einem Gleichrichter (10), einem Speicherkondensator (11) und einem ladespannungsabhängigen, elektronischen Schaltelement (12) aufgebaut ist.

5. Abtrennvorrichtung nach einem der Ansprüche 1 bis 4, dadurch gekennzeichnet, daß das Auslöserelais (5) ein Permanentmagnetauslöser nach dem Haltemagnetprinzip ist.

6. Abtrennvorrichtung nach einem der Ansprüche 1 bis 5, dadurch gekennzeichnet, daß sie aus einer Baueinheit mit Gehäuse (13) und zwei Anschlußklemmen (15) besteht, von denen eine für den Anschluß der Verbindungsleitung (6a) mit den zugeordneten Ableitern (1) und die andere für den Anschluß der Erdungsleitung (6b) zum Anlagenerder (Potentialausgleichsschiene) vorgesehen ist, und daß die Baueinheit (13) mittels Montageschrauben auf einer Montagefläche und/oder mittels einer Schnellbefestigungseinrichtung auf einer Montageschiene befestigt werden kann.

7. Abtrennvorrichtung nach einem der Ansprüche 1 bis 5, dadurch gekennzeichnet, daß sie zusammen mit den Bauelementen für den Überspannungsschutz (1a) (Varistoren, Funkenstrecken etc.) in einem Gehäuse (14) angeordnet ist, das die Anschlußklemmen für den Netzanschluß und die Erdungsleitung (15) trägt, und das mittels Montageschrauben auf einer Montagefläche und/oder mittels einer schnellbefestigungseinrichtung auf einer Montageschiene befestigt werden kann.

8. Abtrennvorrichtung nach einem der Ansprüche 1 bis 7, dadurch gekennzeichnet, daß der Schaltmechanismus (3) zusätzlich zu dem Unterbrecherkontakt (2) für die Erdungsleitung (6a, 6b) noch einen Signalkontakt (16) betätigt.

9. Abtrennvorrichtung nach einem der Ansprüche 1 bis 8, dadurch gekennzeichnet, daß eine optische und/oder eine akustische Anzeigeeinrichtung, die im Gehäuse der Abtrennvorrichtung (13) vorgesehen ist, den Ausschaltzustand des Unterbrecherkontaktes (2) anzeigt.

10. Abtrennvorrichtung nach Anspruch 9 dadurch gekennzeichnet, daß die Anzeigeeinrichtung eine Blinkschaltung oder ein Summer ist.

11. Abtrennvorrichtung nach einem der Ansprüche 1 bis 10, dadurch gekennzeichnet, daß sie den Aufbau eines Fehlerstromschutzschalters mit einer Mindestauslösezeit von 10 ms (Kennlinie G oder S) entspricht, und daß eine oder mehrere parallele Hauptstrombahnen (2a, 2b, 2c, 2d) für die Unterbrechung der Erdungsleitung (6a, 6b) des zugeordneten Ableiters (1) benützt werden.

12. Abtrennvorrichtung nach einem der Ansprüche 1 bis 10, dadurch gekennzeichnet, daß sie den Aufbau eines Fehlerstromschutzschalters mit einer Mindestauslösezeit von 10 ms (Kennlinie G oder 5) entspricht, und daß jeweils eine der Hauptstrombahnen (2a,b,c,d) mit den zugeordneten Unterbrecherkontakten für die Unterbrechung der Erdungsleitung (6a, 6b) der Ableiter (1(L1), 1(L2), 1 (L3), 1(N)) benützt wird.

13. Abtrennvorrichtung nach einem der Ansprüche 1 bis 12, dadurch gekennzeichnet, daß sie eine Prüfeinrichtung (18) besitzt, bei deren Betätigung über einen Schließkontakt (19) und einen Strombegrenzungswiderstand (20) ein Fehlerstrom (Prüfstrom) entsprechender Stärke erzeugt wird, wodurch die Abtrennvorrichtung anspricht, und der Prüfstrom nach dem Öffnen der Unterbrecherkontakte (2a,b,c) und eines Hilfskontaktes (21) wieder unterbrochen wird.

# Figur 1

$$U_f = I_f \cdot R_a$$

EP 0 350 477 A2

# Figur 2

EP 0 350 477 A2

# Figur 3

# Figur 4

# Figur 5a

# Figur 5b

Zählerverteilung

HAS

L

N

Wh

$I_\Delta$

L

N

1

18

6a

13

17

4

LS

PE

6b

PAS

$R_a$

Figur 5c

EP 0 350 477 A2

# Figur 6

a)

b)

# Figur 7

# Figur 8

Figur 9

## Figur 10

# Figur 11